# EUROPEAN PATENT SPECIFICATION

(11) **EP 2 493 191 B1**
(45) Date of publication and mention of the grant of the patent: **28.10.2015**
(21) Application number: 10827933.2
(22) Date of filing: 08.11.2010
(51) Int. Cl.: H04N 7/173, H04L 29/08

(54) **METHOD, DEVICE AND SYSTEM FOR REALIZING HIERARCHICALLY REQUESTING CONTENT IN HTTP STREAMING SYSTEM**
VERFAHREN, VORRICHTUNG UND SYSTEM ZUR DURCHFÜHRUNG HIERARCHISCHER INHALTSABFRAGEN IN EINEM HTTP-STREAMING-SYSTEM
PROCÉDÉ, DISPOSITIF ET SYSTÈME PERMETTANT DE RÉALISER UNE DEMANDE HIÉRARCHIQUE DE CONTENU DANS UN SYSTÈME DE DIFFUSION HTTP

(30) Priority: 09.11.2009 CN 200910110054
(43) Date of publication of application: 29.08.2012
(73) Proprietor: Huawei Technologies Co., Ltd., Longgang District Shenzhen, Guangdong 518129 (CN)
(72) Inventor: YUAN, Weizhong, Shenzhen Guangdong 518129 (CN); SHI, Teng, Shenzhen Guangdong 518129 (CN); ZHANG, Yuanyuan, Shenzhen Guangdong 518129 (CN); LIU, Guangyuan, Shenzhen Guangdong 518129 (CN); TIAN, Yonghui, Shenzhen Guangdong 518129 (CN); ZHANG, Renzhou, Shenzhen Guangdong 518129 (CN); WU, Lingyan, Shenzhen Guangdong 518129 (CN); YUE, Peiyu, Shenzhen Guangdong 518129 (CN); ZHANG, Chuxiong, Shenzhen Guangdong 518129 (CN)
(74) Representative: Kreuz, Georg Maria
(86) International application number: PCT/CN2010/078518
(87) International publication number: WO 2011/054319

(56) References cited:
- CN-A- 1 902 865
- CN-A- 101 193 273
- CN-A- 101 287 107
- NOKIA CORPORATION: "Static HTTP Streaming", 3GPP DRAFT; S4-AHI071_STATIC_HTTP_STREAMING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seattle, WA, USA; 20091001, 1 October 2009 (2009-10-01), XP050398762, [retrieved on 2009-09-29]

## Description

### FIELD OF THE INVENTION

The present invention relates to the field of network communications technologies, and in particular to a method, an apparatus and a system for hierarchically requesting contents in a Hypertext Transfer Protocol (HTTP) streaming system.

### BACKGROUND OF THE INVENTION

A user obtains and plays multi-media contents by using terminal devices in many manners, in which the typical manners include: a manner in which the multi-media contents are downloaded to a local disk through an HTTP file or a Point to Point (P2P) file for playing, a conventional streaming media manner (a Real-time Transfer Protocol (RTP)/a Real-time Transport Control Protocol (RTCP) of data transmission, and a Real Time Streaming Protocol (RTSP) of play control), on-line live broadcast/on demand of a P2P streaming media manner, and HTTP progressive download.

The HTTP progressive download is an improvement of the HTTP file download manner, and may enable the terminal device to perform download as well as play. It is not required to play the whole file only after the completion of the download, and the starting time of the play is not long. An implementation principle is to segment the media contents, and one (/a group of) content segment(s) can be independently decoded in the terminal device without dependence of other segments. In this way, one (/a group of) content segment(s) needs to be transmitted each time between a server and a client, and the terminal device may decode and play the content segment after receiving the content segment, and meanwhile, the terminal device may also receive the next (the next group of) content segment(s). Through such manner, processing granularity of the media file is adjusted from the whole file to one content segment thereof, and the typical content segment playing duration may be several seconds, such as 1 second-10 seconds.

The HTTP protocol is a stateless protocol, and therefore, an HTTP streaming scheme constructed on the basis of the HTTP protocol obtains an easy implementation advantage, that is, an HTTP request and a response at each time can constitute a transaction independent from other HTTP requests/responses. However, the following requirements are also proposed for such scheme at the same time. In order to obtain one media content segment each time, the client needs to actively transmit one HTTP request to the server, and the HTTP server serves the request of the client and returns a response message including the corresponding content segment.

In this way, when the server segments the media contents, it is required to balance the size (duration) of the content segment to be segmented.

If each content segment is large (the duration is long), when starting playing and performing Seek operation, the client needs a long time to obtain and buffer the content segment. In addition, since the HTTP protocol has no cancellation mechanism, once the content segment begins to be transmitted, the content segment needs to be completely transmitted (definitely, Transmission Control Protocol (TCP) connection may be closed and recreated, but an extra burden may be caused in this way), and relatively long segment duration may also affect timeliness of a code rate switch response since the code rate switch at least uses the segment as the smallest unit.

If each content segment is relatively small (the duration is short), the client needs to frequently initiate a request to the server. Many HTTP request messages may increase an uplink bandwidth, and meanwhile aggravates the burden of processing the request by the server, and moreover, the effective media contents in each HTTP response are reduced, thereby causing the declination of an effective media transmission rate.

In the prior art the NOKIA CORPORATION document: "Static HTTP Streaming 3GPP DRAFT; S4-AHI071_STATIC_HTTP_STREAMING, 3RD GENERATION PARTNERSHIP PROJECT (3GPP), MOBILE COMPETENCE CENTRE; 650, TOUTE DES LUCIOLES; F-06921 SOPHIA-ANTIPOLIS CEDEX; FRANCE" describes Static HTTP Streaming and discloses that both static and dynamic HTTP streaming require knowledge of the procedure to be used to construct the URL for media data requests.In the prior art, Qualcomm proposes that a plurality of continuous content segments may be encapsulated into one Segment Aggregate (SA) file, and the client may obtain the complete SA, or obtains distribution conditions and position information of the segments in the SA through metadata of the SA according to requirements, and requests to obtain segment data through a partial GET manner.

The SA is a structure between the whole media contents and the basic composition content segment, so as to obtain greater flexibility than before. In such case, a process of obtaining, by the client, the media contents may be summarized in the following steps.
Steps 1-2: The client requests media presentation description information from the server to obtain necessary media metadata information, and generates the subsequent media content request with the help of the information; and the server returns the description information to the client, in which the description information includes time information of the SA levels and Uniform Resource Locator (URL) information for obtaining the SA.
Steps 3-4: The client requests the corresponding SA through the HTTP GET request manner according to URL of the SA in the description information; and the server returns the corresponding SA after receiving such request message.
Step 5: If a segment request triggering event occurs (for example, code rate switch is required since playing is started, Seek operation is performed, and bandwidth is changed), which SA the segment required to be requested is located in is determined.
Steps 6-7: The client requests an initial portion (the metadata information for describing the SA needs to be located in a header portion of the SA) of the SA through a partial GET request manner according to the determined URL of the SA, and about 1,000 bytes may be first requested; and the server returns the initial portion of the SA including the metadata information after receiving the request message (if the metadata information required by the client is not included in the returned response message, the client may determine a range of the bytes required to be further requested and transmit a request again, and the server transmits the residual metadata information of the SA to the client).
Step 8: The client parses and processes the metadata information of the SA, and obtains the position information of the required segment in the SA (an initial position and length of the segment).
Steps 9-10: The client requests a certain segment in the SA through the partial GET manner by using the URL of the SA and the position information of the segment in the SA; and the server returns the corresponding segment data through the response message.

The sequence of the steps 3-4, 5-10 is determined according to an actual playing process, and may be repeated for many times according to actual requirements.

In the prior art, in order to obtain the metadata information of the SA, and the content segment included in the SA, the terminal and the server need to support the partial GET operation of the HTTP protocol, but a part of the servers (particularly, a cache server at a content distribution network edge) or terminals do not support the partial GET operation at present. If the cache server at the content distribution network edge does not support the partial GET operation, the cache server needs to forward the received partial GET request to the server for processing, and cannot cache the response, and the response time of the request may be increased. In addition, when the client needs to request the segment, the client needs to first request the metadata of the SA from the server, and then analyzes and processes the obtained metadata information, and can construct the corresponding partial GET request only after obtaining the position information of the segment. Therefore, the processing efficiency is low.

However, it is not a must for the HTTP protocol to support the partial GET operation. Not to mention that the HTTP servers and the cache devices already widely deployed in the Internet may include the earlier servers merely supporting the HTTP 1.0 protocol, even in Request For Comment (RFC) 2616 of the HTTP 1.1 protocol, words in the part for specifying the partial GET are as follows: "A server MAY ignore the Range header.", and "MUST", "SHALL" or "SHOULD" used for compulsory support in the RFC is not used, while only the suggestion "ought to support byte ranges when possible" is given. Therefore, the partial GET scheme may not be supported or may be incompatible in some network environments.

### SUMMARY OF THE INVENTION

A method for hierarchically requesting contents in an HTTP streaming system includes: transmitting, by a client, a service information obtaining request; receiving a service information obtaining request response including media presentation description information, in which the media presentation description information includes URLs corresponding to multi-level service contents and URL construction rule; wherein the multi-level service content comprise segment and Segment Aggregate, SA; and the URL corresponding to the multi-level service content comprised in the media presentation description information specifically is allocated to the SA; determining, by the client, a Segment Aggregate, SA, corresponding to the segment and the URL corresponding to the SA according to a service requirement and the media presentation description information; determining, by the client, a corresponding serial number of the segment in the SA; constructing, by the client, the URL corresponding to the segment according to the URL construction rule in the media presentation description information, the serial number of the segment and the URL corresponding to the determined SA; transmitting, by the client, a service request message being a GET message transmitted from the client, in which the request message includes the constructed URLs; and receiving, by the client, a service request message response comprising the service content corresponding to the URL comprised in the service request message.

A system for hierarchically requesting contents in an HTTP streaming system includes: a server, configured to receive a service information obtaining request transmitted from a client, return a service information obtaining request response including media presentation description information to the client, in which the media presentation description information includes URLs corresponding to multi-level service contents and URL construction rule, receive a service request message being a GET message transmitted from the client, in which the request message includes an URL corresponding to a segment constructed by the client, and return a service request message response to the client, in which the service request message response includes the service contents corresponding to the URL comprised in the service request message; and a client, configured to transmit the service information obtaining request to the server, determine a Segment Aggregate, SA, corresponding to a segment and a URL corresponding to the SA according to a service requirement and the media presentation description information, determine a corresponding serial number of the segment in the SA, construct the URL corresponding to the segment according to the URL construction rule, the serial number of the segment and the URL corresponding to the determined SA, transmit the service request message being a GET message including the constructed URL to the server; and receive a service request message response comprising the service content corresponding to the constructed URL from the server.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a processing process of obtaining media contents in an SA scheme in the prior art;
FIG. 2 is a flow chart of a method for hierarchically requesting contents in an HTTP streaming system according to an embodiment of the present invention;
FIG. 3 is an example diagram of hierarchically segmenting media contents according to an embodiment of the present invention;
FIG. 4 is a flow chart of processing an SA request of a client according to an embodiment of the present invention;
FIG. 5 is a flow chart of processing a segment request of a client according to an embodiment of the present invention;
FIG. 6 is a block diagram of a server according to an embodiment of the present invention;
FIG. 7 is a basic block diagram of a system for hierarchically requesting contents in an HTTP streaming system according to an embodiment of the present invention;
FIG. 8 is a basic flow chart of another method for hierarchically requesting contents in an HTTP streaming system according to an embodiment of the present invention;
FIG. 9 is a basic flow chart of another method for hierarchically requesting contents in an HTTP streaming system according to an embodiment of the present invention;
FIG. 10 is a basic flow chart of another method for hierarchically requesting contents in an HTTP streaming system according to an embodiment of the present invention;
FIG. 11 is a basic flow chart of another method for hierarchically requesting contents in an HTTP streaming system according to an embodiment of the present invention;
FIG. 12 is a flow chart of processing a segment triggering event by a client according to an embodiment of the present invention;
FIG. 13 is a basic flow chart of another method for hierarchically requesting contents in an HTTP streaming system according to an embodiment of the present invention; and
FIG. 14 is a processing process in which a client processes a segment triggering event according to an embodiment of the present invention.

### DETAILED DESCRIPTION OF THE EMBODIMENTS

In order to make persons skilled in the art better understand the present invention, the present invention is described in further detail below with reference to the accompanying drawings and embodiments.

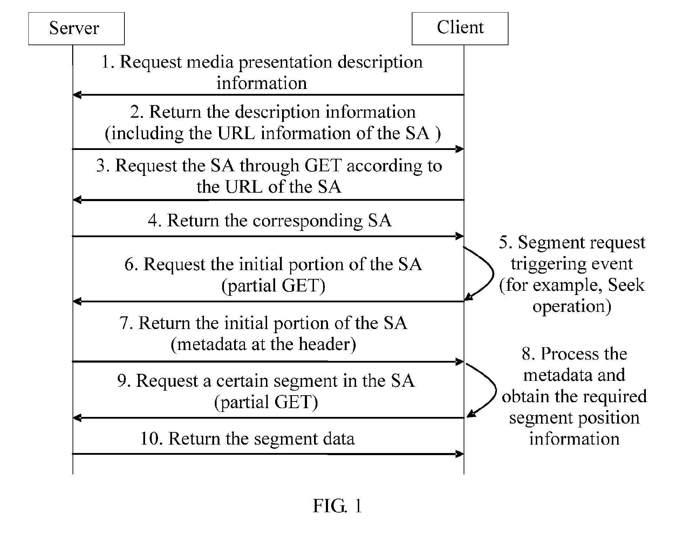

FIG. 1 shows a basic process of a method for hierarchically requesting contents in an HTTP streaming system according to an embodiment of the present invention. Referring to FIG. 1, the method mainly includes the following steps.
Step A1: Receive a service information obtaining request transmitted from a client.

The client requests media presentation description information from a server, so as to obtain necessary media metadata, in which the metadata here is resource description information.
Step A2: Return a service information obtaining request response including the media presentation description information to the client, in which the media presentation description information includes URLs corresponding to service contents.

The server returns the media presentation description information to the client, in which the description information needs to include duration information of segments in various levels (and the number of included content segments in the next level) or unified segment time axis information, and complete URL information corresponding to segments in various levels.

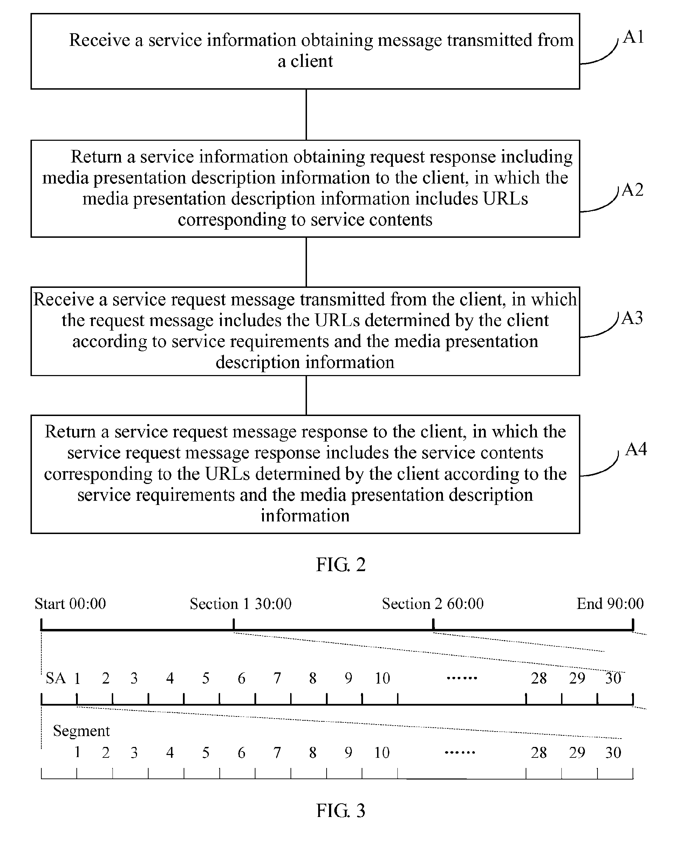

When the media description information is provided, if the segments in the same level (granularity) are totally the same in duration, it is merely required to provide the duration information of the segments in different levels (optionally, as well as the number of the included content segments in the next level), for example, the duration of each SA is 1 minute (30 segments are included, or 10 seconds with 10 segments included, or 30 seconds with 15 segments included), and the duration of the segment is 2 seconds (or 1 second). In the case that the content segmentation is performed according to the fixed length, if the last section or the SA is different from the previous section or SA of the same level in the duration, corresponding description information needs to be separately provided. If the segments in the same level (granularity) are not totally the same in the duration, it is required to provide unified time axis information related to the segment condition of the whole media contents. An embodiment of a segment with a fixed length is as shown in FIG. 3.

In FIG. 3, the duration of each SA may be the same or different, and likewise, the duration of each segment in the SA may be the same or different. Correspondingly, URLs of the content segments corresponding to the embodiment in which the content segmentation is performed hierarchically may be organized as shown in Table 1.

**Table 1**

| |
|---|
| Code rate 1 → URL Media contents corresponding to a rate 1 version |
| Section 1 URL → Content segment corresponding to the code rate 1 and the section 1 |
| SA 1 URL → corresponding to the SA 1 |
| Segment 1_1 URL → corresponding to the segment 1 |
| Segment 1_2 URL → corresponding to the segment 2 |
| Segment 1_3 URL → corresponding to the segment 3 |
| ...... |
| Segment 1_M URL → corresponding to the segment M |
| SA 2 URL → corresponding to the SA 2 |
| ...... |
| SA 3 URL → corresponding to the SA 3 |
| ...... |
| SA N URL → corresponding to the SA N |
| Section 2 URL → Content segment corresponding to the code rate 1 and the section 2 |
| ...... |
| Section 3 URL → Content segment corresponding to the code rate 1 and the section 3 |
| ...... |
| Optional code rate 2 URL |
| ...... |
| Other optional code rate URLs...... |

The segments herein merely correspond to the contents in a certain period in the SA, and as long as the media contents included in all the continuous segments and corresponding to one SA are the same as the media contents included in the SA, the segments are allowed not to be totally the same as the data contents of the corresponding time period directly included in the SA.

A3: Receive a service request message being a GET message transmitted from the client, in which the request message includes the URLs of the service contents determined by the client according to service requirements and the media presentation description information.

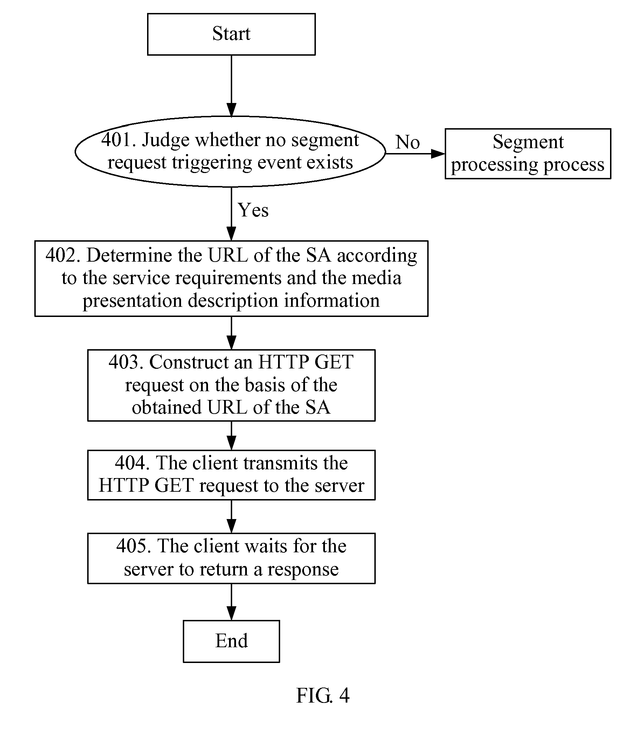

The client requests the corresponding SA through an HTTP GET request manner according to the URL of the SA in the description information and the time information of the SA required to be requested, and the server returns the corresponding SA after receiving the request message. Referring to FIG. 4, a processing process of an SA request of the client includes the following steps.
Step 401: The client judges whether no segment request triggering event exists, and if a segment request triggering event exists, a corresponding segment triggering event processing process is performed; if no segment request triggering event exists, the following steps are performed.
Step 402: The client determines the URL of the SA required to be requested according to the description information and the time information of the SA required to be requested. If the duration of the SA is fixed, a serial number of the SA is obtained by dividing the time information of the SA required to be requested by the time information of each SA (for example, if the duration of each SA is 30 seconds, and the SA after 20 minutes of the beginning is required to be requested, the 41st SA is the right one). If the duration of the SA is not fixed, the serial number of the SA required to be requested may be determined according to the unified segment time axis information in the media presentation description information. According to the serial number of the SA, the URL of the SA corresponding to the serial number is obtained through the complete URL information corresponding to the segments in various levels and included in the media presentation description information. If the HTTP Streaming scheme supports dynamic code rate switch, during the determination of the URL of the SA, the serial number of the SA needs to be combined with code rate information, that is, what code rate is the next SA required to be requested, and the URL of the SA corresponding to the serial number is obtained in the corresponding code rate.
Step 403: The client constructs a corresponding HTTP GET request message on the basis of the obtained URL of the SA.
Step 404: The client transmits the HTTP GET request message to the server.

The specific processing process depends on implementation of the server and content deployment, and the following different deployment implementation manners may be supported.
(a) Each URL of the SA corresponds to one stored and static SA file (for example, each SA can be stored into one .3gp or .mp4 file), and the server directly obtains the corresponding SA file according to the URL of the SA, encapsulates the SA file in an HTTP response message and transmits the HTTP response message to the client.
(b) The contents of the SA corresponding to each URL of the SA are static, that is, different clients transmit the HTTP request message constructed by the same URL of the SA, and the obtained contents of the SA are totally the same. However, a plurality of SAs may be continuously stored into the same large file, and the server maps the position and length information of the SA in the large file according to the URL information, dynamically extracts the required contents of the SA from the file storing the plurality of SAs when serving the request of the client, and encapsulates the contents in the HTTP response message and transmits the HTTP response message to the client.

Step 405: The client waits for the server to return a response message.

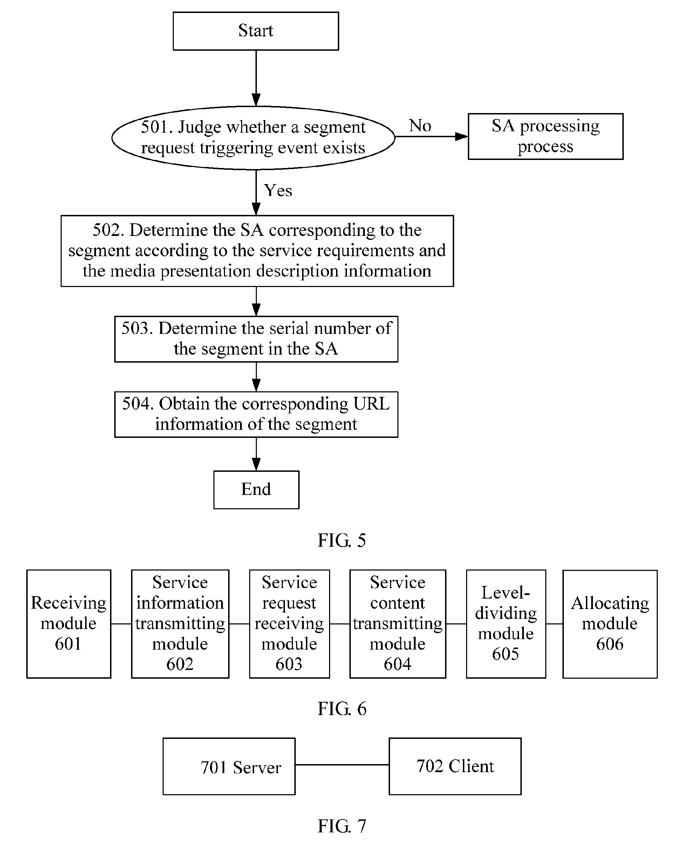

If a segment request triggering event occurs (for example, code rate switch is required since playing is started, Seek operation is performed, and bandwidth is changed), the client determines which SA the segment required to be requested is located in and the serial number of the segment in the SA according to the media presentation description information and the requested time point, and further determines the URL of the segment required to be requested. Referring to FIG. 5, a specific segment processing process includes the following steps.
Step 501: The client judges whether a segment request triggering event exists, and if no segment request triggering event exists, a corresponding SA request processing process is performed; if a segment request triggering event exists, the following steps are performed.
Step 502: The client determines the SA corresponding to the segment required to be requested according to the description information and the time information of the segment required to be requested. If the duration of the SA is fixed, a serial number of the corresponding SA is obtained according to the time information of the SA required to be requested and the time information of each SA (for example, if the duration of each SA is 30 seconds, and the segment after 30 minutes 12 seconds of the beginning is required to be requested, the 61st segment is the right one). If the duration of the SA is not fixed, the serial number of the SA required to be requested may be determined according to the unified segment time axis information in the media presentation description information and a point in a time range of the SA where the segment drops.
Step 503: If the duration of the segment included in the determined SA is fixed, the serial number of the corresponding segment is obtained according to the duration of the SA and the duration information of each segment (or the number of the segments in the next level included in the SA), for example, if the duration of the SA is 30 seconds, the duration of the segment is 2 seconds (or the SA includes 15 segments), and the duration of the segment required to be requested is 12 seconds after the beginning of the SA, the 7th segment is the right one. If the duration of the segment included in the SA is not fixed, the serial number of the segment required to be requested in the corresponding SA is determined according to the unified segment time axis information in the media presentation description information and the time point information of the segment to be requested.
Step 504: The client obtains the URL information of the segment corresponding to the serial number according to the complete URL information corresponding to the segments in various levels and included in the media presentation description information. If the HTTP Streaming scheme supports dynamic code rate switch, during the determination of the URL of the segment, the serial number of the segment needs to be combined with the code rate information, that is, what code rate is the next segment required to be requested, and the URL information of the segment corresponding to the serial number is obtained in the corresponding code rate. The client constructs the HTTP GET request message by using the URL of the segment obtained through the foregoing steps, and transmits the HTTP GET request message to the server to request the corresponding content segment.
   A4: Return a service request message response to the client, in which the service request message response includes the service contents corresponding to the URLs of the service contents determined by the client according to the service requirements and the media presentation description information.

After receiving the request message, the server returns the corresponding content segment.

The embodiment of the present invention provides a method for hierarchically requesting contents in an HTTP streaming system, which includes: receiving the service information obtaining request transmitted from the client; returning the service information obtaining request response including the media presentation description information to the client, in which the media presentation description information includes the URLs corresponding to the service contents; receiving the service request message being a GET message transmitted from the client, in which the request message includes the URLs of the service contents determined by the client according to service requirements and the media presentation description information; and returning the service request message response to the client, in which the service request message response includes the service contents corresponding to the URLs of the service contents determined by the client according to the service requirements and the media presentation description information, so that the contents are searched for directly according to the URLs, thereby improving the processing efficiency.

FIG. 6 is a basic block diagram of a server according to an embodiment of the present invention. Referring to FIG. 6, the server mainly includes: a receiving module 601, a service information transmitting module 602, a service request receiving module 603, and a service content transmitting module 604.

The receiving module 601 is configured to receive a service information obtaining request for requesting media presentation description information from the server by the client, so as to obtain necessary media metadata, in which the metadata herein is resource description information.

The service information transmitting module 602 is configured to return a service information obtaining request response including the media presentation description information to the client, in which the media presentation description information includes URLs corresponding to service contents. When the service information transmitting module 602 returns the media presentation description information to the client, the description information needs to include duration information of segments in various levels (and the number of the included content segments in the next level) or unified segment time axis information, and complete URL information corresponding to the segments in various levels.

When the media description information is provided, if the segments in the same level (granularity) are totally the same in duration, it is merely required to provide the duration information of the segments in different levels (optionally, as well as the number of the included content segments in the next level), for example, the duration of each SA is 1 minute (30 segments are included, or 10 seconds with 10 segments included, or 30 seconds with 15 segments included), and the duration of the segment is 2 seconds (or 1 second). In the case that the content segmentation is performed according to the fixed length, if the last section or the SA is different from the previous section or SA of the same level in the duration, corresponding description information needs to be separately provided. If the segments in the same level (granularity) are not totally the same in the duration, it is required to provide unified time axis information related to the segment condition of the whole media contents. An embodiment of a segment with a fixed length is as shown in FIG. 3.

In FIG. 3, the duration of each SA may be the same or different, and likewise, the duration of each segment in the SA may be the same or different. Correspondingly, URLs of the content segments corresponding to the embodiment in which the content segmentation is performed hierarchically may be organized as shown in Table 1.

The service request receiving module 603 is configured to receive a service request message being a GET message transmitted from the client, in which the request message includes the URLs of the service contents determined by the client according to the service requirements and the media presentation description information. The client uses an HTTP GET request manner to request the corresponding SA according to the URL of the SA in the description information and the time information of the SA required to be requested, and the server returns the corresponding SA after receiving the request message. Referring to FIG. 4, a processing process of the SA request of the client includes the following steps.
Step 401: The client judges whether no segment request triggering event exists, and if a segment request triggering event exists, a corresponding segment triggering event processing process is performed; if no segment request triggering event exists, the following steps are continuously performed.
Step 402: The client determines the URL of the SA required to be requested according to the description information and the time information of the SA required to be requested. If the duration of the SA is fixed, a serial number of the SA is obtained by dividing the time information of the SA required to be requested by the time information of each SA (for example, if the duration of each SA is 30 seconds, and the SA after 20 minutes of the beginning is required to be requested, the 41st SA is the right one). If the duration of the SA is not fixed, the serial number of the SA required to be requested may be determined according to the unified segment time axis information in the media presentation description information. According to the serial number of the SA, the URL of the SA corresponding to the serial number is obtained through the complete URL information corresponding to the segments in various levels and included in the media presentation description information. If the HTTP Streaming scheme supports dynamic code rate switch, during the determination of the URL of the SA, the serial number of the SA needs to be combined with code rate information, that is, what code rate is the next SA required to be requested, and the URL of the SA corresponding to the serial number is obtained in the corresponding code rate.
Step 403: The client constructs a corresponding HTTP GET request message on the basis of the obtained URL of the SA.
Step 404: The client transmits the HTTP GET request message to the server.

The specific processing process depends on implementation of the server and content deployment, and the following different deployment implementation manners may be supported.
(a) Each URL of the SA corresponds to one stored and static SA file (for example, each SA can be stored into one .3gp or .mp4 file), and the server directly obtains the corresponding SA file according to the URL of the SA, encapsulates the SA file in an HTTP response message and transmits the HTTP response message to the client.
(b) The contents of the SA corresponding to each URL of the SA are static, that is, different clients transmit the HTTP request message constructed by the same URL of the SA, and the obtained contents of the SA are totally the same. However, a plurality of SAs may be continuously stored into the same large file, and the server maps the position and length information of the SA in the large file according to the URL information, dynamically extracts the required contents of the SA from the file storing the plurality of SAs when serving the request of the client, and encapsulates the contents in the HTTP response message and transmits the HTTP response message to the client.

Step 5: The client waits for the server to return a response message.

If a segment request triggering event occurs (for example, code rate switch is required since playing is started, Seek operation is performed, and bandwidth is changed), the client determines which SA the segment required to be requested is located in and the serial number of the segment in the SA according to the media presentation description information and the requested time point, and further determines the URL of the segment required to be requested. Referring to FIG. 5, a specific segment processing process includes the following steps.
Step 501: The client judges whether a segment request triggering event exists, and if no segment request triggering event exists, a corresponding SA request processing process is performed; if a segment request triggering event exists, the following steps are performed.
Step 502: The client determines the SA corresponding to the segment required to be requested according to the description information and the time information of the segment required to be requested. If the duration of the SA is fixed, a serial number of the corresponding SA is obtained according to the time information of the SA required to be requested and the time information of each SA (for example, if the duration of each SA is 30 seconds, and the segment after 30 minutes 12 seconds of the beginning is required to be requested, the 61st segment is the right one). If the duration of the SA is not fixed, the serial number of the SA required to be requested may be determined according to the unified segment time axis information in the media presentation description information and a point in a time range of the SA where the segment drops.
Step 503: If the duration of the segment included in the determined SA is fixed, the serial number of the corresponding segment is obtained according to the duration of the SA and the duration information of each segment (or the number of the segments in the next level included in the SA), for example, if the duration of the SA is 30 seconds, the duration of the segment is 2 seconds (or the SA includes 15 segments), and the duration of the segment required to be requested is 12 seconds after the beginning of the SA, the 7th segment is the right one. If the duration of the segment included in the SA is not fixed, the serial number of the segment required to be requested in the corresponding SA is determined according to the unified segment time axis information in the media presentation description information and the time point information of the segment to be requested.
Step 504: The client obtains the URL information of the segment corresponding to the serial number according to the complete URL information corresponding to the segments in various levels and included in the media presentation description information. If the HTTP Streaming scheme supports dynamic code rate switch, during the determination of the URL of the segment, the serial number of the segment needs to be combined with the code rate information, that is, what code rate is the next segment required to be requested, and the URL information of the segment corresponding to the serial number is obtained in the corresponding code rate.

The service content transmitting module 604 is configured to return a service request message response to the client, in which the service request message response includes the service contents corresponding to the URLs of the service contents determined by the client according to the service requirements and the media presentation description information.

The client constructs the HTTP GET request message by using the obtained URLs of the segments through the foregoing steps, and transmits the message to the server to request the corresponding content segment, and the server returns the corresponding content segment after receiving the request message.

The server further includes a level-dividing module 605 and an allocating module 606.

The level-dividing module 605 is configured to at least divide media resources into playing units, segments, SAs and sections.

The allocating module 606 is configured to allocate the URLs to the segments, the SAs and the sections.

The embodiment of the present invention provides a server. The receiving module 601 receives the service information obtaining message transmitted from the client; the service information transmitting module 602 returns the service information obtaining message response including the media presentation description information to the client, in which the media presentation description information includes the URLs corresponding to the service contents; the service request receiving module 603 receives the service request message being a GET message transmitted from the client, in which the request message includes the URLs of the service contents determined by the client according to service requirements and the media presentation description information; and the service content transmitting module 604 returns the service request message response to the client, in which the service request message response includes the service contents corresponding to the URLs of the service contents determined by the client according to the service requirements and the media presentation description information, so that the contents are searched for directly according to the URLs, thereby improving the processing efficiency.

FIG. 7 is a basic block diagram of a system for hierarchically requesting contents in an HTTP streaming system according to an embodiment of the present invention. Referring to FIG. 7, the system mainly includes a server 701 and a client 702.

The server 701 is configured to receive a service information obtaining request transmitted from a client 702, return a service information obtaining request response including media presentation description information to the client 702, in which the media presentation description information includes URLs corresponding to service contents, receive a service request message being a GET message transmitted from the client 702, in which the request message includes the URLs of the segments determined by the client according to service requirements and the media presentation description information, return a service request message response to the client 702, in which the service request message response includes the service contents corresponding to the URLs of the service contents determined by the client 702 according to the service requirements and the media presentation description information, receive a service information obtaining request for requesting the media presentation description information from the server by the client, so as to obtain necessary media metadata, in which the metadata herein is resource description information, and return a service information obtaining request response including the media presentation description information, in which the media presentation description information includes duration information of segments in various levels (and the number of included content segments in the next level) or unified segment time axis information, and complete URL information corresponding to segments in various levels.

When the media description information is provided, if the segments in the same level (granularity) are totally the same in duration, it is merely required to provide the duration information of the segments in different levels (optionally, as well as the number of the included content segments in the next level), for example, the duration of each SA is 1 minute (30 segments are included, or 10 seconds with 10 segments included, or 30 seconds with 15 segments included), and the duration of the segment is 2 seconds (or 1 second). In the case that the content segmentation is performed according to the fixed length, if the last section or the SA is different from the previous section or SA of the same level in the duration, corresponding description information needs to be separately provided. If the segments in the same level (granularity) are not totally the same in the duration, it is required to provide unified time axis information related to the segment condition of the whole media contents. An embodiment of a segment with a fixed length is as shown in FIG. 3.

In FIG. 3, the duration of each SA may be the same or different, and likewise, the duration of each segment in the SA may be the same or different. Correspondingly, URLs of the content segments corresponding to the embodiment in which the content segmentation is performed hierarchically may be organized as shown in Table 1. The service request message being a GET message transmitted from the client 702 is received, in which the request message includes the URLs of the service contents determined by the client according to the service requirements and the media presentation description information; the client 702 uses an HTTP GET request manner to request the corresponding SA according to the URL of the SA in the description information and the time information of the SA required to be requested; and the server returns the corresponding SA after receiving the request message.

The client 702 is configured to transmit a service information obtaining request to the server 701, and transmit the service request message being a GET message including the URLs of the service contents determined according to the service requirements and the media presentation description information to the server 701 after obtaining the media presentation description information including the URLs corresponding to the service contents and returned by the server.

Referring to FIG. 4, a processing process of an SA request of the client includes the following steps.
Step 401: The client judges whether no segment request triggering event exists, and if a segment request triggering event exists, a corresponding segment triggering event processing process is performed; if no segment request triggering event exists, the following steps are continuously performed.
Step 402: The client determines the URL of the SA required to be requested according to the description information and the time information of the SA required to be requested. If the duration of the SA is fixed, a serial number of the SA is obtained by dividing the time information of the SA required to be requested by the time information of each SA (for example, if the duration of each SA is 30 seconds, and the SA after 20 minutes of the beginning is required to be requested, the 41st SA is the right one). If the duration of the SA is not fixed, the serial number of the SA required to be requested may be determined according to the unified segment time axis information in the media presentation description information. According to the serial number of the SA, the URL of the SA corresponding to the serial number is obtained through the complete URL information corresponding to the segments in various levels and included in the media presentation description information. If the HTTP Streaming scheme supports dynamic code rate switch, during the determination of the URL of the SA, the serial number of the SA needs to be combined with code rate information, that is, what code rate is the next SA required to be requested, and the URL of the SA corresponding to the serial number is obtained in the corresponding code rate.
Step 403: The client constructs a corresponding HTTP GET request message on the basis of the obtained URL of the SA.
Step 404: The client transmits the HTTP GET request message to the server.

The specific processing process depends on implementation of the server and content deployment, and the following different deployment implementation manners may be supported.
(a) Each URL of the SA corresponds to one stored and static SA file (for example, each SA can be stored into one .3gp or .mp4 file), and the server directly obtains the corresponding SA file according to the URL of the SA, encapsulates the SA file in an HTTP response message and transmits the HTTP response message to the client.
(b) The contents of the SA corresponding to each URL of the SA are static, that is, different clients transmit the HTTP request message constructed by the same URL of the SA, and the obtained contents of the SA are totally the same. However, a plurality of SAs may be continuously stored into the same large file, and the server maps the position and length information of the SA in the large file according to the URL information, dynamically extracts the required contents of the SA from the file storing the plurality of SAs when serving the request of the client, and encapsulates the contents in the HTTP response message and transmits the HTTP response message to the client.

Step 405: The client waits for the server to return a response message.

If a segment request triggering event occurs (for example, code rate switch is required since playing is started, Seek operation is performed, and bandwidth is changed), the client determines which SA the segment required to be requested is located in and the serial number of the segment in the SA according to the media presentation description information and the requested time point, and further determines the URL of the segment required to be requested. Referring to FIG. 5, a specific segment processing process includes the following steps.
Step 501: The client judges whether a segment request triggering event exists, and if no segment request triggering event exists, a corresponding SA request processing process is performed; if a segment request triggering event exists, the following steps are performed.
Step 502: The client determines the SA corresponding to the segment required to be requested according to the description information and the time information of the segment required to be requested. If the duration of the SA is fixed, a serial number of the corresponding SA is obtained according to the time information of the SA required to be requested and the time information of each SA (for example, if the duration of each SA is 30 seconds, and the segment after 30 minutes 12 seconds of the beginning is required to be requested, the 61st segment is the right one). If the duration of the SA is not fixed, the serial number of the SA required to be requested may be determined according to the unified segment time axis information in the media presentation description information and a point in a time range of the SA where the segment drops.
Step 503: If the duration of the segment included in the determined SA is fixed, the serial number of the corresponding segment is obtained according to the duration of the SA and the duration information of each segment (or the number of the segments in the next level included in the SA), for example, if the duration of the SA is 30 seconds, the duration of the segment is 2 seconds (or the SA includes 15 segments), and the duration of the segment required to be requested is 12 seconds after the beginning of the SA, the 7th segment is the right one. If the duration of the segment included in the SA is not fixed, the serial number of the segment required to be requested in the corresponding SA is determined according to the unified segment time axis information in the media presentation description information and the time point information of the segment to be requested.
Step 504: The client obtains the URL information of the segment corresponding to the serial number according to the complete URL information corresponding to the segments in various levels and included in the media presentation description information. If the HTTP Streaming scheme supports dynamic code rate switch, during the determination of the URL of the segment, the serial number of the segment needs to be combined with the code rate information, that is, what code rate is the next segment required to be requested, and the URL information of the segment corresponding to the serial number is obtained in the corresponding code rate.

The embodiment of the present invention provides a system for hierarchically requesting contents in an HTTP streaming system. The server 701 receives the service information obtaining request transmitted from the client 702, returns the service information obtaining request response including the media presentation description information to the client 702, in which the media presentation description information includes the URLs corresponding to the service contents, receives a service request message being a GET message transmitted from the client 702, in which the request message includes the URLs of the service contents determined by the client according to service requirements and the media presentation description information, and returns a service request message response to the client 702, in which the service request message response includes the service contents corresponding to the URLs of the service contents determined by the client according to the service requirements and the media presentation description information, so that the contents are searched for directly according to the URLs, thereby improving the processing efficiency.

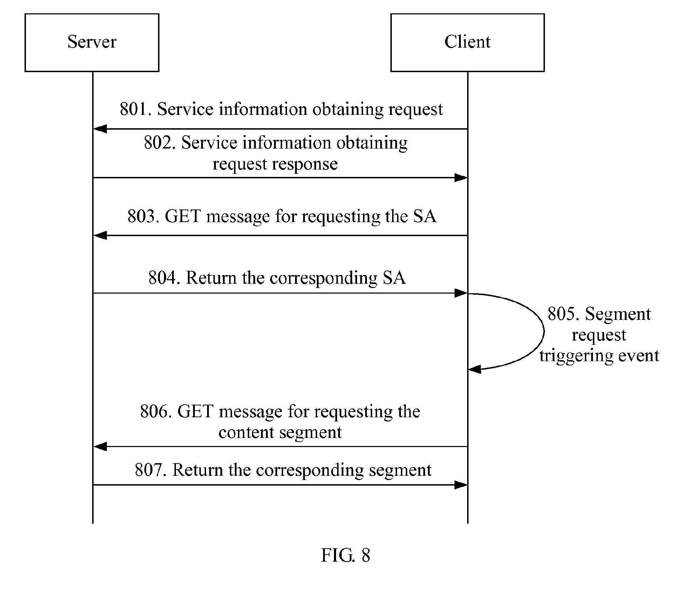

FIG. 8 shows a specific embodiment of a method for hierarchically requesting contents in an HTTP streaming system according to an embodiment of the present invention. Referring to FIG. 8, the method includes the following steps.
Step 801: A client transmits a service information obtaining request to a server.

The client requests media presentation description information from the server, so as to obtain necessary media metadata, in which the media metadata here is resource description information.
Step 802: The server returns a service information obtaining request response to the client.

The server returns the media presentation description information to the client, in which the description information needs to include duration information of segments in various levels (and the number of included content segments in the next level) or unified segment time axis information, and complete URL information corresponding to segments in various levels.

When the media description information is provided, if the segments in the same level (granularity) are totally the same in duration, it is merely required to provide the duration information of the segments in different levels (optionally, as well as the number of the included content segments in the next level), for example, the duration of each SA is 1 minute (30 segments are included, or 10 seconds with 10 segments included, or 30 seconds with 15 segments included), and the duration of the segment is 2 seconds (or 1 second). In the case that the content segmentation is performed according to the fixed length, if the last section or the SA is different from the previous section or SA of the same level in the duration, corresponding description information needs to be separately provided. If the segments in the same level (granularity) are not totally the same in the duration, it is required to provide unified time axis information related to the segment condition of the whole media contents. An embodiment of a segment with a fixed length is as shown in FIG. 3.

In FIG. 3, the duration of each SA may be the same or different, and likewise, the duration of each segment in the SA may be the same or different. Correspondingly, URLs of the content segments corresponding to the embodiment in which the content segmentation is performed hierarchically may be organized as shown in Table 1.

The segment herein merely corresponds to the contents in a certain period in the SA, and as long as the media contents included in all the continuous segments and corresponding to one SA are the same as the media contents included in the SA, the segment is allowed not to be totally the same as the data contents of the corresponding time period directly included in the SA.
Step 803: The client transmits a GET message for requesting the SA to the server.

Referring to FIG. 4, a processing process of an SA request of the client includes the following steps.
Step 401: The client judges whether no segment request triggering event exists, and if a segment request triggering event exists, a corresponding segment triggering event processing process is performed; if no segment request triggering event exists, the following steps are continuously performed.
Step 402: The client determines the URL of the SA required to be requested according to the description information and the time information of the SA required to be requested. If the duration of the SA is fixed, a serial number of the SA is obtained by dividing the time information of the SA required to be requested by the time information of each SA (for example, if the duration of each SA is 30 seconds, and the SA after 20 minutes of the beginning is required to be requested, the 41st SA is the right one). If the duration of the SA is not fixed, the serial number of the SA required to be requested may be determined according to the unified segment time axis information in the media presentation description information. According to the serial number of the SA, the URL of the SA corresponding to the serial number is obtained through the complete URL information corresponding to the segments in various levels and included in the media presentation description information. If the HTTP Streaming scheme supports dynamic code rate switch, during the determination of the URL of the SA, the serial number of the SA needs to be combined with code rate information, that is, what code rate is the next SA required to be requested, and the URL of the SA corresponding to the serial number is obtained in the corresponding code rate.
Step 403: The client constructs a corresponding HTTP GET request message on the basis of the obtained URL of the SA.
Step 404: The client transmits the HTTP GET request message to the server.

The specific processing process depends on implementation of the server and content deployment, and the following different deployment implementation manners may be supported.
(a) Each URL of the SA corresponds to one stored and static SA file (for example, each SA can be stored into one .3gp or .mp4 file), and the server directly obtains the corresponding SA file according to the URL of the SA, encapsulates the SA file in an HTTP response message and transmits the HTTP response message to the client.
(b) The contents of the SA corresponding to each URL of the SA are static, that is, different clients transmit the HTTP request message constructed by the same URL of the SA, and the obtained contents of the SA are totally the same. However, a plurality of SAs may be continuously stored into the same large file, and the server maps the position and length information of the SA in the large file according to the URL information, dynamically extracts the required contents of the SA from the file storing the plurality of SAs when serving the request of the client, and encapsulates the contents in the HTTP response message and transmits the HTTP response message to the client.

Step 405: The client waits for the server to return a response message.
Step 804: The server returns the corresponding SA to the client.
Step 805: Judge whether a segment request triggering event occurs.

If a segment request triggering event occurs (for example, code rate switch is required since playing is started, Seek operation is performed, and bandwidth is changed), the client determines which SA the segment required to be requested is located in and the serial number of the segment in the SA according to the media presentation description information and the requested time point, and further determines the URL of the segment required to be requested.
Step 806: The client transmits a GET message for requesting the segment contents to the server.

Referring to FIG. 5, a specific segment processing process includes the following steps.
Step 501: The client judges whether a segment request triggering event exists, and if no segment request triggering event exists, a corresponding SA request processing process is performed; if a segment request triggering event exists, the following steps are performed.
Step 502: The client determines the SA corresponding to the segment required to be requested according to the description information and the time information of the segment required to be requested. If the duration of the SA is fixed, a serial number of the corresponding SA is obtained according to the time information of the SA required to be requested and the time information of each SA (for example, if the duration of each SA is 30 seconds, and the segment after 30 minutes 12 seconds of the beginning is required to be requested, the 61st segment is the right one). If the duration of the SA is not fixed, the serial number of the SA required to be requested may be determined according to the unified segment time axis information in the media presentation description information and a point in a time range of the SA where the segment drops.
Step 503: If the duration of the segment included in the determined SA is fixed, the serial number of the corresponding segment is obtained according to the duration of the SA and the duration information of each segment (or the number of the segments in the next level included in the SA), for example, if the duration of the SA is 30 seconds, the duration of the segment is 2 seconds (or the SA includes 15 segments), and the duration of the segment required to be requested is 12 seconds after the beginning of the SA, the 7th segment is the right one. If the duration of the segment included in the SA is not fixed, the serial number of the segment required to be requested in the corresponding SA is determined according to the unified segment time axis information in the media presentation description information and the time point information of the segment to be requested.
Step 504: The client obtains the URL information of the segment corresponding to the serial number according to the complete URL information corresponding to the segments in various levels and included in the media presentation description information. If the HTTP Streaming scheme supports dynamic code rate switch, during the determination of the URL of the segment, the serial number of the segment needs to be combined with the code rate information, that is, what code rate is the next segment required to be requested, and the URL information of the segment corresponding to the serial number is obtained in the corresponding code rate. The client constructs the HTTP GET request message by using the URLs of the segments obtained through the foregoing steps, and transmits the HTTP GET request message to the server to request the corresponding content segment.
Step 807: The server returns the corresponding segment contents to the client.

After receiving the request message, the server returns the corresponding content segment is returned.

The embodiment of the present invention provides a method for hierarchically requesting contents in an HTTP streaming system, which includes: receiving the service information obtaining request transmitted from the client; returning the service information obtaining request response including the media presentation description information to the client, in which the media presentation description information includes the URLs corresponding to the service contents; receiving a service request message being a GET message transmitted from the client, in which the request message includes the URLs of the service contents determined by the client according to service requirements and the media presentation description information; and returning a service request message response to the client, in which the service request message response includes the service contents corresponding to the URLs of the service contents determined by the client according to the service requirements and the media presentation description information, so that the contents are searched for directly according to the URLs, thereby improving the processing efficiency.

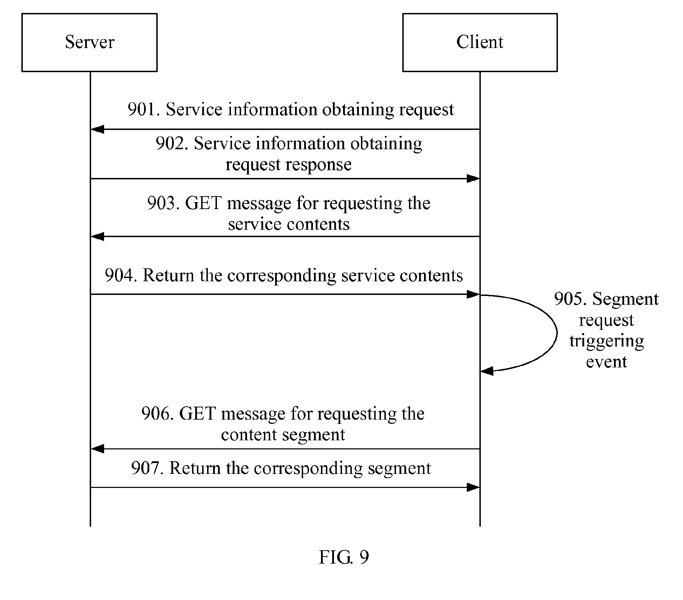

FIG. 9 shows a specific embodiment of a method for hierarchically requesting contents in an HTTP streaming system according to an embodiment of the present invention. Referring to FIG. 9, the method includes the following steps.
Step 901: A client transmits a service information obtaining request to a server.

The client requests media presentation description information from the server, so as to obtain necessary media metadata, in which the media metadata here is resource description information.
Step 902: The server returns a service information obtaining request response to the client.

The server returns the media presentation description information to the client, in which the description information needs to include duration information of segments in various levels (and the number of included content segments in the next level) or unified segment time axis information, and complete URL information corresponding to segments in various levels.

When the media description information is provided, if the segments in the same level (granularity) are totally the same in duration, it is merely required to provide the duration information of the segments in different levels (optionally, as well as the number of the included content segments in the next level), for example, the duration of each SA is 1 minute (30 segments are included, or 10 seconds with 10 segments included, or 30 seconds with 15 segments included), and the duration of the segment is 2 seconds (or 1 second). In the case that the content segmentation is performed according to the fixed length, if the last section or the SA is different from the previous section or SA of the same level in the duration, corresponding description information needs to be separately provided. If the segments in the same level (granularity) are not totally the same in the duration, it is required to provide unified time axis information related to the segment condition of the whole media contents. An embodiment of a segment with a fixed length is as shown in FIG. 3.

In FIG. 3, the duration of each SA may be the same or different, and likewise, the duration of each segment in the SA may be the same or different. Correspondingly, URLs of the content segments corresponding to the embodiment in which the content segmentation is performed hierarchically may be organized as shown in Table 1.

The segment herein merely corresponds to the contents in a certain period in the SA, and as long as the media contents included in all the continuous segments and corresponding to one SA are the same as the media contents included in the SA, the segment is allowed not to be totally the same as the data contents of the corresponding time period directly included in the SA.
Step 903: The client transmits a GET message for requesting the service contents to the server.

Herein, the level of the segment currently processed needs to be judged and determined, and the URL information corresponding to the level is obtained. Factors taken into consideration for selecting the segment level are as follows: selection of a user, available bandwidth conditions, plevel cache size, requirements on an effective media contents load rate, and server policies, and it is supposed that the request here is the SA as shown in FIG. 3.

Referring to FIG. 4, a processing process of an SA request of the client includes the following steps.
Step 401: The client judges whether no segment request triggering event exists, and if a segment request triggering event exists, a corresponding segment triggering event processing process is performed; if no segment request triggering event exists, the following steps are continuously performed.
Step 402: The client determines the URL of the SA required to be requested according to the description information and the time information of the SA required to be requested. If the duration of the SA is fixed, a serial number of the SA is obtained by dividing the time information of the SA required to be requested by the time information of each SA (for example, if the duration of each SA is 30 seconds, and the SA after 20 minutes of the beginning is required to be requested, the 41st SA is the right one). If the duration of the SA is not fixed, the serial number of the SA required to be requested may be determined according to the unified segment time axis information in the media presentation description information. According to the serial number of the SA, the URL of the SA corresponding to the serial number is obtained through the complete URL information corresponding to the segments in various levels and included in the media presentation description information. If the HTTP Streaming scheme supports dynamic code rate switch, during the determination of the URL of the SA, the serial number of the SA needs to be combined with code rate information, that is, what code rate is the next SA required to be requested, and the URL of the SA corresponding to the serial number is obtained in the corresponding code rate.
Step 403: The client constructs a corresponding HTTP GET request message on the basis of the obtained URL of the SA.
Step 404: The client transmits the HTTP GET request message to the server.

The specific processing process depends on implementation of the server and content deployment, and the following different deployment implementation manners may be supported.
(a) Each URL of the SA corresponds to one stored and static SA file (for example, each SA can be stored into one .3gp or .mp4 file), and the server directly obtains the corresponding SA file according to the URL of the SA, encapsulates the SA file in an HTTP response message and transmits the HTTP response message to the client.
(b) The contents of the SA corresponding to each URL of the SA are static, that is, different clients transmit the HTTP request message constructed by the same URL of the SA, and the obtained contents of the SA are totally the same. However, a plurality of SAs may be continuously stored into the same large file, and the server maps the position and length information of the SA in the large file according to the URL information, dynamically extracts the required contents of the SA from the file storing the plurality of SAs when serving the request of the client, and encapsulates the contents in the HTTP response message and transmits the HTTP response message to the client.

Step 405: The client waits for the server to return a response message.
Step 904: The server returns the corresponding SA to the client.
Step 905: Judge whether a segment request triggering event occurs.

If a lower-level segment triggering event occurs, corresponding event processing is performed. Herein, not only the segment triggering event is considered, but also all the events switched for the lower-level segments need to be considered overall (that is, the duration of each segment needs to become shorter, and the condition that the SA is switched to the segment is also included). After the corresponding event processing is completed or over, corresponding processing or information is required to inform step 903, so that the processing in step 903 can determine the levels of the subsequent media segment contents required to be requested. Herein, the processing of the segment triggering event is taken as an example.
Step 906: The client transmits a GET message for requesting the segment contents to the server.

Referring to FIG. 5, a specific segment processing process includes the following steps.
Step 501: The client judges whether a segment request triggering event exists, and if no segment request triggering event exists, a corresponding SA request processing process is performed; if a segment request triggering event exists, the following steps are performed.
Step 502: The client determines the SA corresponding to the segment required to be requested according to the description information and the time information of the segment required to be requested. If the duration of the SA is fixed, a serial number of the corresponding SA is obtained according to the time information of the SA required to be requested and the time information of each SA (for example, if the duration of each SA is 30 seconds, and the segment after 30 minutes 12 seconds of the beginning is required to be requested, the 61st segment is the right one). If the duration of the SA is not fixed, the serial number of the SA required to be requested may be determined according to the unified segment time axis information in the media presentation description information and a point in a time range of the SA where the segment drops.
Step 503: If the duration of the segment included in the determined SA is fixed, the serial number of the corresponding segment is obtained according to the duration of the SA and the duration information of each segment (or the number of the segments in the next level included in the SA), for example, if the duration of the SA is 30 seconds, the duration of the segment is 2 seconds (or the SA includes 15 segments), and the duration of the segment required to be requested is 12 seconds after the beginning of the SA, the 7th segment is the right one. If the duration of the segment included in the SA is not fixed, the serial number of the segment required to be requested in the corresponding SA is determined according to the unified segment time axis information in the media presentation description information and the time point information of the segment to be requested.
Step 504: The client obtains the URL information of the segment corresponding to the serial number according to the complete URL information corresponding to the segments in various levels and included in the media presentation description information. If the HTTP Streaming scheme supports dynamic code rate switch, during the determination of the URL of the segment, the serial number of the segment needs to be combined with the code rate information, that is, what code rate is the next segment required to be requested, and the URL information of the segment corresponding to the serial number is obtained in the corresponding code rate. The client constructs the HTTP GET request message by using the URL of the segment obtained through the foregoing steps, and transmits the HTTP GET request message to the server to request the corresponding content segment.
Step 907: The server returns the corresponding segment contents to the client.

After receiving the request message, the server returns the corresponding content segment.

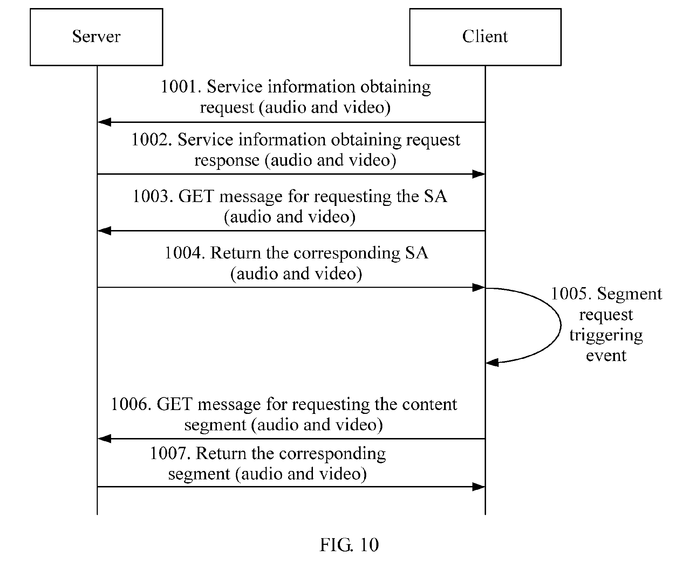

FIG. 10 shows a specific embodiment of a method for hierarchically requesting contents in an HTTP streaming system according to an embodiment of the present invention. Referring to FIG. 10, the method includes the following steps.
Step 1001: A client transmits a service information obtaining request to a server.

The client requests media presentation description information from a server, so as to obtain necessary media metadata, in which the media metadata here is resource description information, and audio and video metadata are required to be obtained here.
Step 1002: The server returns a service information obtaining request response to the client.

The server returns the media presentation description information to the client, in which the description information needs to include duration information of segments in various levels (and the number of included content segments in the next level) or unified segment time axis information, and complete URL information corresponding to segments in various levels. Herein, the media presentation description information includes video and audio URL information, the audio URL information is taken as an example in the following, and the video URL information is similar.

When the media description information is provided, if the segments in the same level (granularity) are totally the same in duration, it is merely required to provide the duration information of the segments in different levels (optionally, as well as the number of the included content segments in the next level), for example, the duration of each SA is 1 minute (30 segments are included, or 10 seconds with 10 segments included, or 30 seconds with 15 segments included), and the duration of the segment is 2 seconds (or 1 second). In the case that the content segmentation is performed according to the fixed length, if the last section or the SA is different from the previous section or SA of the same level in the duration, corresponding description information needs to be separately provided. If the segments in the same level (granularity) are not totally the same in the duration, it is required to provide unified time axis information related to the segment condition of the whole media contents. An embodiment of a segment with a fixed length is as shown in FIG. 3.

In FIG. 3, the duration of each SA may be the same or different, and likewise, the duration of each segment in the SA may be the same or different. Correspondingly, audio and video content segment URLs corresponding to the embodiment in which the content segmentation is performed hierarchically may be organized as shown in Table 2.

Embodiment 3 of corresponding URLs of the content segments may be organized in the following.

**Table 2**

| |
|---|
| Code rate 1 URL → Media contents corresponding to a code rate 1 version |
| Section 1 URL → Content segment corresponding to the code rate 1 and the section 1 |
| SA 1 video URL → corresponding to SA 1 video content |
| SA 1 audio URL → corresponding to SA 1 audio content |
| Segment 1_1 video URL → corresponding to segment 1 video content |
| Segment 1_1 audio URL → corresponding to segment 1 audio content |
| Segment 1 2 video URL → corresponding to segment 2 video content |
| Segment 1_2 audio URL → corresponding to segment 2 audio content |
| Segment 1_3 video URL → corresponding to segment 3 video content |
| Segment 1_3 audio URL → corresponding to segment 3 audio content |
| ...... |
| Segment 1_M video URL → corresponding to segment M video content |
| Segment 1_M audio URL → corresponding to segment M audio content |
| SA 2 video URL → corresponding to SA 2 video content |
| SA 2 audio URL → corresponding to SA 2 audio content |
| ...... |
| SA 3 video URL → corresponding to SA 3 video content |
| SA 3 audio URL → corresponding to SA 3 audio content |
| ...... |
| SA N video URL → corresponding to SA N video content |
| SA N audio URL → corresponding to SA N audio content |
| ...... |
| Section 2 URL → Content segment corresponding to the code rate 1 and the section 2 |
| ...... |
| Section 3 URL → Content segment corresponding to the code rate 1 and the section 3 |
| ...... |
| Optional code rate 2 URL |
| ...... |
| Other optional code rate URLs...... |

In the table, the audio and video contents are not separated for the contents of each section, and may be definitely separated.

The segment herein merely corresponds to the contents in a certain period in the SA, and as long as the media contents included in all the continuous segments and corresponding to one SA are the same as the media contents included in the SA, the segment is allowed not to be totally the same as the data contents of the corresponding time period directly included in the SA.
Step 1003: The client transmits a GET message for requesting the SA to the server.

In order to play the media contents in a certain SA time period, it is required to respectively transmit the HTTP GET request of the audio SA and the HTTP GET request of the video SA, and the processing of the both and the transmission sequence are not strictly required, as long as the audio and video contents of the corresponding SA is ready before the time point of playing the SA to be requested. A request of a music SA is taken as an example in the following.

Referring to FIG. 4, a processing process of an SA request of the client includes the following steps.
Step 401: The client judges whether no segment request triggering event exists, and if a segment request triggering event exists, a corresponding segment triggering event processing process is performed; if no segment request triggering event exists, the following steps are continuously performed.
Step 402: The client determines the URL of the SA required to be requested according to the description information and the time information of the SA required to be requested. If the duration of the SA is fixed, a serial number of the SA is obtained by dividing the time information of the SA required to be requested by the time information of each SA (for example, if the duration of each SA is 30 seconds, and the SA after 20 minutes of the beginning is required to be requested, the 41st SA is the right one). If the duration of the SA is not fixed, the serial number of the SA required to be requested may be determined according to the unified segment time axis information in the media presentation description information. According to the serial number of the SA, the URL of the SA corresponding to the serial number is obtained through the complete URL information corresponding to the segments in various levels and included in the media presentation description information. If the HTTP Streaming scheme supports dynamic code rate switch, during the determination of the URL of the SA, the serial number of the SA needs to be combined with code rate information, that is, what code rate is the next SA required to be requested, and the URL of the SA corresponding to the serial number is obtained in the corresponding code rate.
Step 403: The client constructs a corresponding HTTP GET request message on the basis of the obtained URL of the SA.
Step 404: The client transmits the HTTP GET request message to the server.

The specific processing process depends on implementation of the server and content deployment, and the following different deployment implementation manners may be supported.
(a) Each URL of the SA corresponds to one stored and static SA file (for example, each SA can be stored into one .3gp or .mp4 file), and the server directly obtains the corresponding SA file according to the URL of the SA, encapsulates the SA file in an HTTP response message and transmits the HTTP response message to the client.
(b) The contents of the SA corresponding to each URL of the SA are static, that is, different clients transmit the HTTP request message constructed by the same URL of the SA, and the obtained contents of the SA are totally the same. However, a plurality of SAs may be continuously stored into the same large file, and the server maps the position and length information of the SA in the large file according to the URL information, dynamically extracts the required contents of the SA from the file storing the plurality of SAs when serving the request of the client, and encapsulates the contents in the HTTP response message and transmits the HTTP response message to the client.

Step 405: The client waits for the server to return a response message.
Step 1004: The server returns the corresponding SA to the client.
Step 1005: Judge whether a segment request triggering event occurs.

Herein, it is required to determine the URLs of the video segment required to be requested and the URLs of the audio segment, and a music segment is taken as an example in the following.

If a segment request triggering event occurs (for example, code rate switch is required since playing is started, Seek operation is performed, and bandwidth is changed), the client determines which SA the segment required to be requested is located in and the serial number of the segment in the SA according to the media presentation description information and the requested time point, and further determines the URL of the segment required to be requested.
Step 1006: The client transmits a GET message for requesting the segment contents to the server.

Referring to FIG. 5, a specific segment processing process includes the following steps.
Step 501: The client judges whether a segment request triggering event exists, and if no segment request triggering event exists, a corresponding SA request processing process is performed; if a segment request triggering event exists, the following steps are performed.
Step 502: The client determines the SA corresponding to the segment required to be requested according to the description information and the time information of the segment required to be requested. If the duration of the SA is fixed, a serial number of the corresponding SA is obtained according to the time information of the SA required to be requested and the time information of each SA (for example, if the duration of each SA is 30 seconds, and the segment after 30 minutes 12 seconds of the beginning is required to be requested, the 61st segment is the right one). If the duration of the SA is not fixed, the serial number of the SA required to be requested may be determined according to the unified segment time axis information in the media presentation description information and a point in a time range of the SA where the segment drops.
Step 503: If the duration of the segment included in the determined SA is fixed, the serial number of the corresponding segment is obtained according to the duration of the SA and the duration information of each segment (or the number of the segments in the next level included in the SA), for example, if the duration of the SA is 30 seconds, the duration of the segment is 2 seconds (or the SA includes 15 segments), and the duration of the segment required to be requested is 12 seconds after the beginning of the SA, the 7th segment is the right one. If the duration of the segment included in the SA is not fixed, the serial number of the segment required to be requested in the corresponding SA is determined according to the unified segment time axis information in the media presentation description information and the time point information of the segment to be requested.
Step 4: The client obtains the URL information of the segment corresponding to the serial number according to the complete URL information corresponding to the segments in various levels and included in the media presentation description information. If the HTTP Streaming scheme supports dynamic code rate switch, during the determination of the URL of the segment, the serial number of the segment needs to be combined with the code rate information, that is, what code rate is the next segment required to be requested, and the URL information of the segment corresponding to the serial number is obtained in the corresponding code rate. The client constructs the HTTP GET request message by using the URL of the segment obtained through the foregoing steps, and transmits the HTTP GET request message to the server to request the corresponding content segment.
Step 1007: The server returns the corresponding segment contents to the client.

After receiving the request message, the server returns the corresponding content segment.

The embodiment of the present invention provides a method for hierarchically requesting contents in an HTTP streaming system, which includes: receiving the service information obtaining request transmitted from the client; returning the service information obtaining request response including the media presentation description information to the client, in which the media presentation description information includes the URLs corresponding to the service contents; receiving the service request message being a GET message transmitted from the client, in which the request message includes the URLs of the service contents determined by the client according to service requirements and the media presentation description information; and returning the service request message response to the client, in which the service request message response includes the service contents corresponding to the URLs of the service contents determined by the client according to the service requirements and the media presentation description information, so that the contents are searched for directly according to the URLs, thereby improving the processing efficiency.

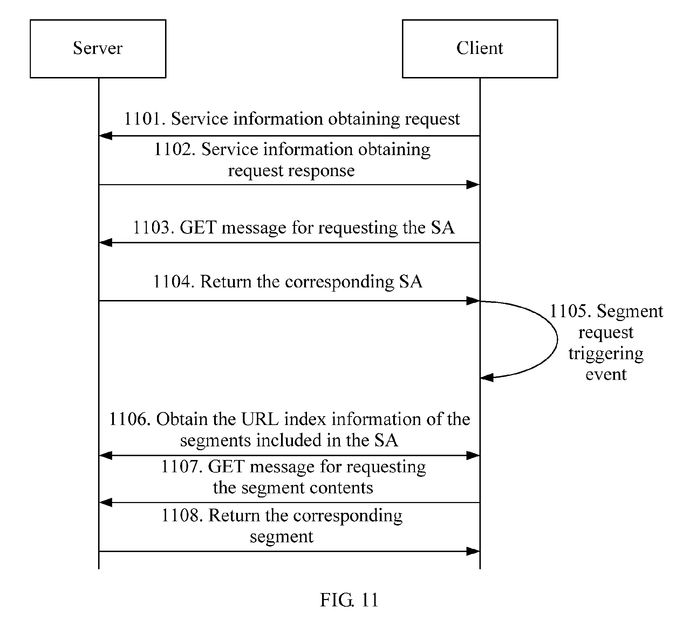

FIG. 11 shows a specific embodiment of a method for hierarchically requesting contents in an HTTP streaming system according to an embodiment of the present invention. Referring to FIG. 11, the method includes the following steps.
Step 1101: A client transmits a service information obtaining request to a server.

The client requests media presentation description information from the server, so as to obtain necessary media metadata, in which the metadata here is resource description information.
Step 1102: The server returns a service information obtaining request response to the client.

The server returns the media presentation description information to the client, in which the description information needs to include duration information of segments in various levels (and the number of included content segments in the next level) or unified segment time axis information, and URL information in higher levels (the URL of the SA level is merely included, but the URLs of the segment in the lowest level is not included).

When the media description information is provided, if the segments in the same level (granularity) are totally the same in duration, it is merely required to provide the duration information of the segments in different levels (optionally, as well as the number of the included content segments in the next level), for example, the duration of each SA is 1 minute (30 segments are included, or 10 seconds with 10 segments included, or 30 seconds with 15 segments included), and the duration of the segment is 2 seconds (or 1 second). In the case that the content segmentation is performed according to the fixed length, if the last section or the SA is different from the previous section or SA of the same level in the duration, corresponding description information needs to be separately provided. If the segments in the same level (granularity) are not totally the same in the duration, it is required to provide unified time axis information related to the segment condition of the whole media contents. An embodiment of a segment with a fixed length is as shown in FIG. 3.

In FIG. 3, the duration of each SA may be the same or different, and likewise, the duration of each segment in the SA may be the same or different. Correspondingly, URLs of the content segments corresponding to the embodiment in which the content segmentation is performed hierarchically may be organized as shown in Table 3.

**Table 3**

| |
|---|
| Code rate 1 URL → Media contents corresponding to a code rate 1 version |
| Section 1 URL → Content segment corresponding to the code rate 1 and the section 1 |
| SA 1 URL → corresponding to the SA 1 |
| (optionally, SA 1 index URL→URL indexes of all the segments included in the SA 1) |
| SA 2 URL → corresponding to the SA 2 |
| ..... |
| SA 3 URL → corresponding to the SA 3 |
| ..... |
| SA N URL → corresponding to the SA N |
| ...... |
| Section 2 URL → Content segment corresponding to the code rate 1 and the section 2 |
| ...... |
| Section 3 URL → Content segment corresponding to the code rate 1 and the section 3 |
| ...... |
| Optional code rate 2 URL |
| ..... |
| Other optional code rate URLs...... |

The following URL list may be obtained through the SA 1 index URL, which is as shown in Table 4.

**Table 4**

| |
|---|
| Segment 1_1 URL → corresponding to segment 1 |
| Segment 1_2 URL → corresponding to segment 2 |
| Segment 1_3 URL → corresponding to segment 3 |
| ...... |
| Segment 1_M URL → corresponding to segment M |

Alternatively, in the case of separation of the audio contents and the video contents, the following URL list is obtained through the SA 1 video index URL, which is as shown in Table 5.

**Table 5**

| |
|---|
| Segment 1_1 video URL → corresponding to segment 1 video content |
| Segment 1_2 video URL → corresponding to segment 2 video content |
| Segment 1_3 video URL → corresponding to segment 3 video content |
| ..... |
| Segment 1_M video URL → corresponding to segment M video content |

The following URL list is obtained through the SA 1 audio index URL.

**Table 6**

| |
|---|
| Segment 1_1 audio URL → corresponding to segment 2 audio content |
| Segment 1_2 audio URL → corresponding to segment 2 audio content |
| Segment 1_3 audio URL → corresponding to segment 3 audio content |
| ..... |
| Segment 1_M audio URL → corresponding to segment M audio content |

The SA 1 index URL (or the SA 1 video index URL/SA 1 audio index URL) of the URL index of all the segments included in the SA 1 is optional, that is, if the SA 1 index URL is not included, the client needs to know how to obtain the URL index of all the segments included in the SA, for example, a scheme constructed by the URL of the SA plus corresponding parameters may be used. A feasible embodiment is as follows.

Construction: SA 1 index URL=SA 1 URLs?id=segmentIndex,
or the hierarchical URLs:
SA 1 index URL=SA 1 URL/segmentIndex.
Step 1103: The client transmits a GET message for requesting the SA to the server.

Referring to FIG. 4, a processing process of an SA request of the client includes the following steps.
Step 401: The client judges whether no segment request triggering event exists, and if a segment request triggering event exists, a corresponding segment triggering event processing process is performed; if no segment request triggering event exists, the following steps are continuously performed.
Step 402: The client determines the URL of the SA required to be requested according to the description information and the time information of the SA required to be requested. If the duration of the SA is fixed, a serial number of the SA is obtained by dividing the time information of the SA required to be requested by the time information of each SA (for example, if the duration of each SA is 30 seconds, and the SA after 20 minutes of the beginning is required to be requested, the 41st SA is the right one). If the duration of the SA is not fixed, the serial number of the SA required to be requested may be determined according to the unified segment time axis information in the media presentation description information. According to the serial number of the SA, the URL of the SA corresponding to the serial number is obtained through the complete URL information corresponding to the segments in various levels and included in the media presentation description information. If the HTTP Streaming scheme supports dynamic code rate switch, during the determination of the URL of the SA, the serial number of the SA needs to be combined with code rate information, that is, what code rate is the next SA required to be requested, and the URL of the SA corresponding to the serial number is obtained in the corresponding code rate.
Step 403: The client constructs a corresponding HTTP GET request message on the basis of the obtained URL of the SA.
Step 404: The client transmits the HTTP GET request message to the server.

The specific processing process depends on implementation of the server and content deployment, and the following different deployment implementation manners may be supported.
(a) Each URL of the SA corresponds to one stored and static SA file (for example, each SA can be stored into one .3gp or .mp4 file), and the server directly obtains the corresponding SA file according to the URL of the SA, encapsulates the SA file in an HTTP response message and transmits the HTTP response message to the client.
(b) The contents of the SA corresponding to each URL of the SA are static, that is, different clients transmit the HTTP request message constructed by the same URL of the SA, and the obtained contents of the SA are totally the same. However, a plurality of SAs may be continuously stored into the same large file, and the server maps the position and length information of the SA in the large file according to the URL information, dynamically extracts the required contents of the SA from the file storing the plurality of SAs when serving the request of the client, and encapsulates the contents in the HTTP response message and transmits the HTTP response message to the client.

Step 405: The client waits for the server to return a response message.
Step 1104: The server returns the corresponding SA to the client.
Step 1105: Judge whether a segment request triggering event occurs.

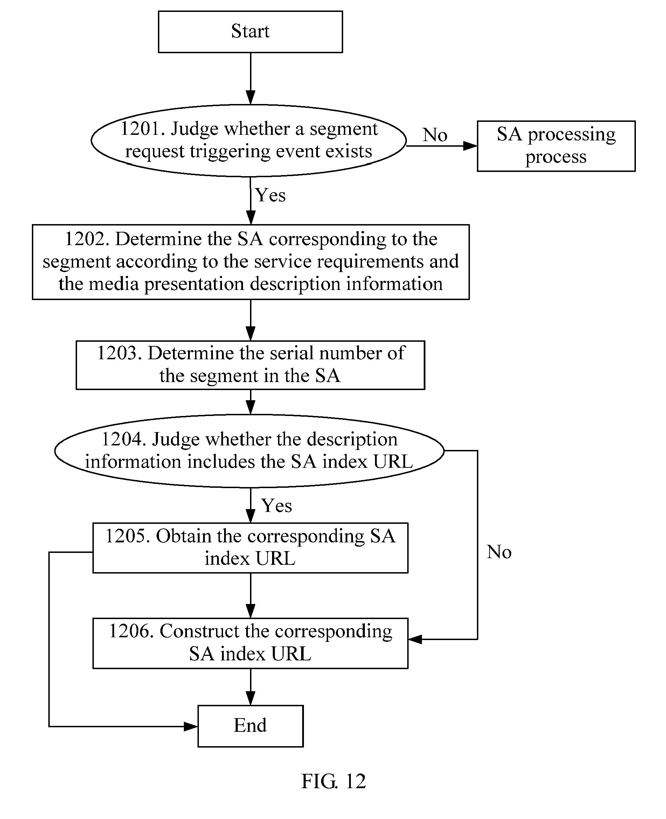

If a segment request triggering event occurs (for example, code rate switch is required since playing is started, Seek operation is performed, and bandwidth is changed), the client determines which SA the segment required to be requested is located in and the serial number of the segment in the SA according to the media presentation description information and the requested time point, and further determines the URL of the segment required to be requested. The specific processing process is as shown in FIG. 12.
Step 1201: The client judges whether a segment request triggering event exists, and if no segment request triggering event exists, a corresponding SA request processing process is performed; if a segment request triggering event exists, the following steps are performed.
Step 1202: The client determines the SA corresponding to the segment required to be requested according to the description information and the time information of the segment required to be requested. If the duration of the SA is fixed, a serial number of the corresponding SA is obtained according to the time information of the SA required to be requested and the time information of each SA (for example, if the duration of each SA is 30 seconds, and the segment after 30 minutes 12 seconds of the beginning is required to be requested, the 61st segment is the right one). If the duration of the SA is not fixed, the serial number of the SA required to be requested may be determined according to the unified segment time axis information in the media presentation description information and a point in a time range of the SA where the segment drops.
Step 1203: If the duration of the segment included in the determined SA is fixed, the serial number of the corresponding segment is obtained according to the duration of the SA and the duration information of each segment (or the number of the segments in the next level included in the SA), for example, if the duration of the SA is 30 seconds, the duration of the segment is 2 seconds (or the SA includes 15 segments), and the duration of the segment required to be requested is 12 seconds after the beginning of the SA, the 7th segment is the right one. If the duration of the segment included in the SA is not fixed, the serial number of the segment required to be requested in the corresponding SA is determined according to the unified segment time axis information in the media presentation description information and the time point information of the segment to be requested.
Step 1204: Judge whether the media presentation description information includes the SA index URL, and if the SA index URL is included, the following step 5 is performed; if the SA index URL is not included, step 6 is performed.
Step 1205: Since the media presentation description information includes the URL of the SA corresponding to the segments in various levels and the SA index URL information, the SA index URL information corresponding to the serial number may be directly obtained. If the HTTP Streaming scheme supports dynamic code rate switch, during the determination of the SA index URL, the serial number of the SA needs to be combined with the code rate information, that is, what code rate is the next SA required to be requested, and the SA index URL corresponding to the serial number is obtained in the corresponding code rate.
Step 1206: Since the media presentation description information does not include the SA index URL information, the client constructs the required SA index URL according to coherent association with the server, and a rule of such construction may be given in the description information, for example, extra parameters may be added in the URL of the SA information, and the accessional parameters need to be given in the description information.
Step 1106: The client transmits a GET message for requesting the segment contents to the server.

The client constructs the corresponding HTTP GET request by using the SA index URL through FIG. 12, and transmits the obtained HTTP GET request message obtained through construction to the server. The server returns the corresponding URL list index, that is, a list of the URLs of each segment arranged in sequence and included in the SA. The client receives the response message transmitted from the server and obtains the SA index information, that is, the URLs of the segments list, determines the URL information of the segment required to be requested according to the serial number of the segment in the SA and the URLs of the segments list, constructs the HTTP GET request message by using the URLs of the segments obtained through the foregoing steps, and transmits the message to the server to request the corresponding content segment.
Step 1107: The server returns the corresponding segment contents to the client.

After receiving the request message, the server returns the corresponding content segment.

The embodiment of the present invention provides a method for hierarchically requesting contents in an HTTP streaming system, which includes: receiving the service information obtaining request transmitted from the client; returning the service information obtaining request response including the media presentation description information to the client, in which the media presentation description information includes the URLs corresponding to the service contents; receiving the service request message being a GET message transmitted from the client, in which the request message includes the URLs of the service contents determined by the client according to service requirements and the media presentation description information; and returning the service request message response to the client, in which the service request message response includes the service contents corresponding to the URLs of the service contents determined by the client according to the service requirements and the media presentation description information, so that the contents are searched for directly according to the URLs, thereby improving the processing efficiency.

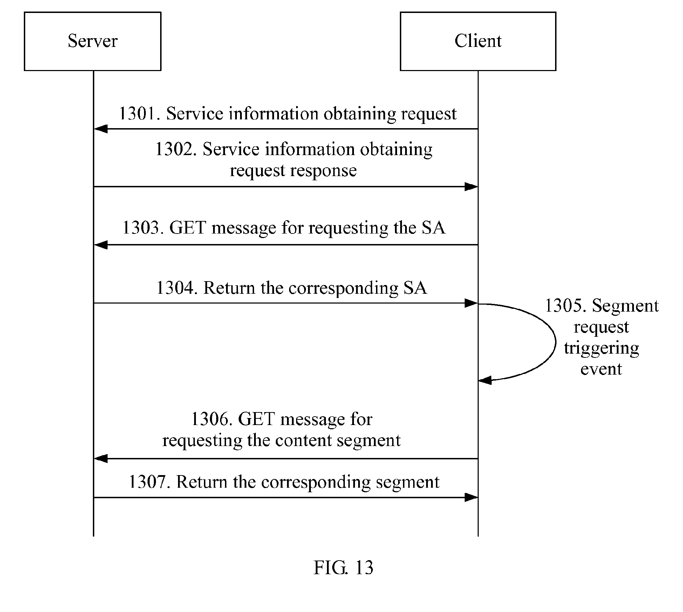

FIG. 13 shows a specific embodiment of a method for hierarchically requesting contents in an HTTP streaming system according to an embodiment of the present invention. Referring to FIG. 13, the method includes the following steps.
Step 1301: A client transmits a service information obtaining request to a server.

The client requests media presentation description information from the server, so as to obtain necessary media metadata, in which the media metadata here is resource description information.
Step 1302: The server returns a service information obtaining request response to the client.

The server returns the media presentation description information to the client, and the description information needs to include duration information of the segments in various levels (and the number of the included content segments in the next level) or unified segment time axis information, and a construction rule of the URLs in levels. The client may directly construct the URLs of the next level resource according to the construction rule and the URLs of the previous level resource.

When the media description information is provided, if the segments in the same level (granularity) are totally the same in duration, it is merely required to provide the duration information of the segments in different levels (optionally, as well as the number of the included content segments in the next level), for example, the duration of each SA is 1 minute (30 segments are included, or 10 seconds with 10 segments included, or 30 seconds with 15 segments included), and the duration of the segment is 2 seconds (or 1 second). In the case that the content segmentation is performed according to the fixed length, if the last section or the SA is different from the previous section or SA of the same level in the duration, corresponding description information needs to be separately provided. If the segments in the same level (granularity) are not totally the same in the duration, it is required to provide unified time axis information related to the segment condition of the whole media contents. An embodiment of a segment with a fixed length is as shown in FIG. 3.

In FIG. 3, the duration of each SA may be the same or different, and likewise, the duration of each segment in the SA may be the same or different. Correspondingly, URLs of the content segments corresponding to the embodiment in which the content segmentation is performed hierarchically may be organized as shown in Table 1.

The segment herein merely corresponds to the contents in a certain period in the SA, and as long as the media contents included in all the continuous segments and corresponding to one SA are the same as the media contents included in the SA, the segment is allowed not to be totally the same as the data contents of the corresponding time period directly included in the SA.
Step 1303: The client transmits a GET message for requesting the SA to the server.

Referring to FIG. 4, a processing process of an SA request of the client includes the following steps.
Step 401: The client judges whether no segment request triggering event exists, and if a segment request triggering event exists, a corresponding segment triggering event processing process is performed; if no segment request triggering event exists, the following steps are continuously performed.
Step 402: The client determines the URL of the SA required to be requested according to the description information and the time information of the SA required to be requested. If the duration of the SA is fixed, a serial number of the SA is obtained by dividing the time information of the SA required to be requested by the time information of each SA (for example, if the duration of each SA is 30 seconds, and the SA after 20 minutes of the beginning is required to be requested, the 41st SA is the right one). If the duration of the SA is not fixed, the serial number of the SA required to be requested may be determined according to the unified segment time axis information in the media presentation description information. According to the serial number of the SA, the URL of the SA corresponding to the serial number is obtained through the complete URL information corresponding to the segments in various levels and included in the media presentation description information. If the HTTP Streaming scheme supports dynamic code rate switch, during the determination of the URL of the SA, the serial number of the SA needs to be combined with code rate information, that is, what code rate is the next SA required to be requested, and the URL of the SA corresponding to the serial number is obtained in the corresponding code rate.
Step 403: The client constructs a corresponding HTTP GET request message on the basis of the obtained URL of the SA.
Step 404: The client transmits the HTTP GET request message to the server.

The specific processing process depends on implementation of the server and content deployment, and the following different deployment implementation manners may be supported.
(a) Each URL of the SA corresponds to one stored and static SA file (for example, each SA can be stored into one .3gp or .mp4 file), and the server directly obtains the corresponding SA file according to the URL of the SA, encapsulates the SA file in an HTTP response message and transmits the HTTP response message to the client.
(b) The contents of the SA corresponding to each URL of the SA are static, that is, different clients transmit the HTTP request message constructed by the same URL of the SA, and the obtained contents of the SA are totally the same. However, a plurality of SAs may be continuously stored into the same large file, and the server maps the position and length information of the SA in the large file according to the URL information, dynamically extracts the required contents of the SA from the file storing the plurality of SAs when serving the request of the client, and encapsulates the contents in the HTTP response message and transmits the HTTP response message to the client.

Step 405: The client waits for the server to return a response message.
Step 1304: The server returns the corresponding SA to the client.
Step 1305: Judge whether a segment request triggering event occurs.

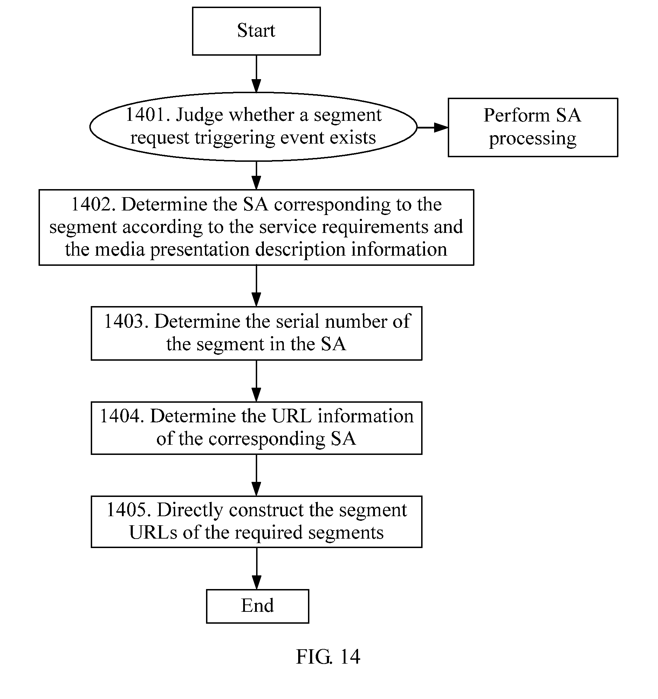

If a segment request triggering event occurs (for example, code rate switch is required since playing is started, Seek operation is performed, and bandwidth is changed), the client determines which SA the segment required to be requested is located in and the serial number of the segment in the SA according to the media presentation description information and the requested time point, and further determines the URL of the segment required to be requested. Referring to FIG. 14, the specific processing process includes the following steps.
Step 1401: The client judges whether a segment request triggering event exists, and if no segment request triggering event exists, a corresponding SA request processing process is performed; if a segment request triggering event exists, the following steps are continuously performed.
Step 1402: The client determines the SA corresponding to the segment required to be requested according to the description information and the time information of the segment required to be requested. If the duration of the SA is fixed, a serial number of the corresponding SA is obtained according to the time information of the SA required to be requested and the time information of each SA (for example, if the duration of each SA is 30 seconds, and the segment after 30 minutes 12 seconds of the beginning is required to be requested, the 61st segment is the right one). If the duration of the SA is not fixed, the serial number of the SA required to be requested may be determined according to the unified segment time axis information in the media presentation description information and a point in a time range of the SA where the segment drops.
Step 1403: If the duration of the segment included in the determined SA is fixed, the serial number of the corresponding segment is obtained according to the duration of the SA and the duration information of each segment (or the number of the segments in the next level included in the SA), for example, if the duration of the SA is 30 seconds, the duration of the segment is 2 seconds (or the SA includes 15 segments), and the duration of the segment required to be requested is 12 seconds after the beginning of the SA, the 7th segment is the right one. If the duration of the segment included in the SA is not fixed, the serial number of the segment required to be requested in the corresponding SA is determined according to the unified segment time axis information in the media presentation description information and the time point information of the segment to be requested.
Step 1404: Determine the URL information of the corresponding SA according to the serial number of the SA corresponding to the segment and the URL of the SA included in the media presentation description information. If the HTTP Streaming scheme supports dynamic code rate switch, during the determination of the URL of the SA, the serial number of the SA needs to be combined with the code rate information, that is, what code rate is the next SA required to be requested, and the URL of the SA corresponding to the serial number is obtained in the corresponding code rate.
Step 1405: The client directly constructs the corresponding URLs of the segments according to the construction rule of the URLs in levels included in the media presentation description information, the URL information of the SA, and the serial number of the segment in the corresponding SA.

For example, if the URL of the 100th content SA with 400K code rate is as follows: http://HDvideo.foo.com/NBA.3gp/QualityLevels(400000)/SegmentAggregates(100),
and in the obtained media presentation description information, the URL construction rule is that, "/Segment (serial number of the segment) is added on the basis of the URL of the SA", the following URLs of the segments may be constructed:
http://HDvideo.foo.com/NBA.3gp/QualityLevels(400000)/SegmentAggregates(100)/Segme nt(X).

Herein, X refers to the serial number of the segment in the corresponding SA determined in step 3.
Step 1306: The client transmits a GET message for requesting the segment contents to the server.

The client constructs the HTTP GET request message by using the URL of the segment obtained through step 1405, and transmits the message to the server to request the corresponding content segment.
Step 1307: The server returns the corresponding segment contents to the client.

After receiving the request message, the server returns the corresponding content segment.

The embodiment of the present invention provides a method for hierarchically requesting contents in an HTTP streaming system, which includes: receiving the service information obtaining request transmitted from the client; returning the service information obtaining request response including the media presentation description information to the client, in which the media presentation description information includes the URLs corresponding to the service contents; receiving the service request message being a GET message transmitted from the client, in which the request message includes the URLs of the service contents determined by the client according to service requirements and the media presentation description information; and returning the service request message response to the client, in which the service request message response includes the service contents corresponding to the URLs of the service contents determined by the client according to the service requirements and the media presentation description information, so that the contents are searched for directly according to the URLs, thereby improving the processing efficiency.

Those of ordinary skill in the art should understand that all or a part of the steps of the method according to the embodiments of the present invention may be implemented by a program instructing relevant hardware. The program may be stored in a computer readable storage medium, such as a ROM, a RAM, a magnetic disk, or an optical disk.

In view of the above, a method, an apparatus and a system for hierarchically requesting contents in an HTTP streaming system are described in detail. The principle and implementation of the present invention are illustrated with specific embodiments, and these embodiments are only intended to explain the method and ideas of the present invention. Persons of ordinary skill may make modifications and variations to the implementation and application range of the present invention without departing from the present invention. Therefore, the above descriptions are not intended to limit the present invention.

## Claims

1. A method for hierarchically requesting content in a Hypertext Transfer Protocol, HTTP, streaming system, comprising:
transmitting, by a client, a service information obtaining request;
receiving, by the client, a service information obtaining request response comprising media presentation description information, wherein the media presentation description information comprises Uniform Resource Locator, URL, corresponding to multi-level service content and URL construction rule; wherein the multi-level service content comprises segment and Segment Aggregate, SA; and the URL corresponding to the multi-level service content comprised in the media presentation description information specifically is allocated to the SA;
determining, by the client, a Segment Aggregate, SA, corresponding to a segment and the URL corresponding to the SA according to a service requirement and the media presentation description information;
determining, by the client, a corresponding serial number of the segment in the SA;
constructing, by the client, the URL corresponding to the segment according to the URL construction rule in the media presentation description information, the serial number of the segment and the URL corresponding to the determined SA;
transmitting, by the client, a service request message being a GET message, wherein the service request message comprises the constructed URL; and
receiving, by the client, a service request message response comprising the service content corresponding to the URL comprised in the service request message.

2. The method according to claim 1, further comprising: transmitting, by the client, a service request message being a GET message and comprising URL of a different multi-level service content determined by the client according to the service requirement and the media presentation description information; and
receiving, by the client, a service request message response comprising different service content corresponding to the URL of the different multi-level service content.

3. A system for hierarchically requesting content in a Hypertext Transfer Protocol, HTTP, streaming system, comprising:
a server, configured to receive a service information obtaining request transmitted from a client, return a service information obtaining request response comprising media presentation description information to the client, wherein the media presentation description information comprises Uniform Resource Locator, URL, corresponding to multi-level service content and URL construction rule, receive a service request message being a GET message transmitted from the client, wherein the service request message comprises an URL corresponding to a segment constructed by the client, and return to the client a service request message response comprising the service content corresponding to the URL comprised in the service request message; and
a client, configured to transmit the service information obtaining request to the server, determine a Segment Aggregate, SA, corresponding to the segment and a URL corresponding to the SA according to a service requirement and the media presentation description information, determine a corresponding serial number of the segment in the SA, construct the URL corresponding to the segment according to the URL construction rule, the serial number of the segment and the URL corresponding to the determined SA, transmit the service request message being a GET message comprising the constructed URL to the server and receive a service request message response comprising the service content corresponding to the URL comprised in the service request message from the server.

## Patentansprüche

1. Verfahren zum hierarchischen Anfordern von Inhalt in einem Hypertextübertragungsprotokoll-Streamingsystem, HTTP-Streamingsystem, das Folgendes umfasst:
Senden, durch einen Client, einer Dienstinformationserhalteanforderung;
Empfangen, durch den Client, einer Dienstinformationserhalteanforderungsantwort, die Medienpräsentationsbeschreibungsinformationen umfasst, wobei die Medienpräsentationsbeschreibungsinformationen eine "Uniform Resource Locator", URL, die Mehrebenendienstinhalt entspricht, und eine URL-Konstruktionsregel umfassen; wobei der Mehrebenendienstinhalt Segment und Segmentaggregat, SA,
umfasst; und die URL, die dem Mehrebenendienstinhalt entspricht und die in den Medienpräsentationsbeschreibungsinformationen enthalten ist, insbesondere dem SA zugewiesen ist;
Bestimmen, durch den Client, eines Segmentaggregats, SA, das einem Segment entspricht, und der URL, die dem SA entspricht, gemäß einer Dienstanforderung und den Medienpräsentationsbeschreibungsinformationen;
Bestimmen, durch den Client, einer entsprechenden Folgenummer des Segments in dem SA;
Konstruieren, durch den Client, der URL, die dem Segment entspricht, gemäß der URL-Konstruktionsregel in den Medienpräsentationsbeschreibungsinformationen, der Folgenummer des Segments und der URL, die dem bestimmten SA entspricht;
Senden, durch den Client, einer Dienstanforderungsnachricht, die eine GET-Nachricht ist, wobei die Dienstanforderungsnachricht die konstruierte URL umfasst; und
Empfangen, durch den Client, einer Dienstanforderungsnachrichtantwort, die den Dienstinhalt, der der URL entspricht, die in der Dienstanforderungsnachricht enthalten ist, umfasst.

2. Verfahren nach Anspruch 1, das ferner Folgendes umfasst: Senden, durch den Client, einer Dienstanforderungsnachricht, die eine GET-Nachricht ist und eine URL eines anderen Mehrebenendienstinhalts umfasst, der durch den Client gemäß der Dienstanforderung und den Medienpräsentationsbeschreibungsinformationen bestimmt ist; und
Empfangen, durch den Client, einer Dienstanforderungsnachrichtantwort, die anderen Dienstinhalt umfasst, der der URL des anderen Mehrebenendienstinhalts entspricht.

3. System zum hierarchischen Anfordern von Inhalt in einem Hypertextübertragungsprotokoll-Streamingsystem, HTTP-Streamingsystem, das Folgendes umfasst:
einen Server, der konfiguriert ist, eine Dienstinformationserhalteanforderung, die von einem Client gesendet wird, zu empfangen, eine Dienstinformationserhalteanforderungsantwort, die Medienpräsentationsbeschreibungsinformationen umfasst, an den Client zurückzugeben, wobei die Medienpräsentationsbeschreibungsinformationen eine "Uniform Resource Locator", URL, die einem Mehrebenendienstinhalt entspricht, und eine URL-Konstruktionsregel umfassen, eine Dienstanforderungsnachricht, die eine GET-Nachricht ist und die von dem Client gesendet wird, zu empfangen, wobei die Dienstanforderungsnachricht eine URL umfasst, die einem Segment entspricht und die durch den Client konstruiert ist, und eine Dienstanforderungsnachrichtantwort an den Client zurückzugeben, die den Dienstinhalt umfasst, der der URL entspricht, die in der Dienstanforderungsnachricht enthalten ist; und
einen Client, der konfiguriert ist, die Dienstinformationserhalteanforderung zu dem Server zu senden, ein Segmentaggregat, SA, das dem Segment entspricht, und eine URL, die dem SA entspricht, gemäß einer Dienstanforderung und den Medienpräsentationsbeschreibungsinformationen zu bestimmen, eine entsprechende Folgenummer des Segments in dem SA zu bestimmen, die URL, die dem Segment entspricht, gemäß der URL-Konstruktionsregel, der Folgenummer des Segments und der URL, die dem bestimmten SA entspricht, zu konstruieren, die Dienstanforderungsnachricht, die eine GET-Nachricht ist, die die konstruierte URL umfasst, zu dem Server zu senden und eine Dienstanforderungsnachrichtantwort, die den Dienstinhalt umfasst, der der URL entspricht, die in der Dienstanforderungsnachricht enthalten ist, von dem Server zu erhalten.

## Revendications

1. Procédé destiné à demander hiérarchiquement du contenu dans un système de diffusion en flux sous protocole de transfert hypertexte, HTTP, comportant les étapes consistant à :
faire émettre par un client une demande d'obtention d'informations de service ;
faire recevoir par le client une réponse à la demande d'obtention d'informations de service comportant des informations de description de présentation de média, les informations de description de présentation de média comportant un localisateur uniforme de ressource, URL, correspondant à un contenu de service multi-niveaux et une règle de constitution d'URL ; le contenu de service multi-niveaux comportant un segment et un agrégat de segments, SA ; et l'URL correspondant au contenu de service multi-niveaux figurant dans les informations de description de présentation de média étant spécifiquement attribuée au SA ;
faire déterminer par le client un agrégat de segments, SA, correspondant à un segment et l'URL correspondant au SA en fonction d'une exigence de service et des informations de description de présentation de média ;
faire déterminer par le client un numéro de série correspondant du segment dans le SA ;
faire constituer par le client l'URL correspondant au segment selon la règle de constitution d'URL figurant dans les informations de description de présentation de média, le numéro de série du segment et l'URL correspondant au SA déterminé ;
faire émettre par le client un message de demande de service qui est un message GET, le message de demande de service comportant l'URL constituée ; et
faire recevoir par le client un message de réponse à la demande de service comportant le contenu de service correspondant à l'URL figurant dans le message de demande de service.

2. Procédé selon la revendication 1, comportant en outre les étapes consistant à : faire émettre par le client un message de demande de service qui est un message GET et qui comporte une URL d'un contenu différent de service multi-niveaux déterminé par le client en fonction de l'exigence de service et des informations de description de présentation de média ; et
faire recevoir par le client un message de réponse à la demande de service comportant un contenu différent de service correspondant à l'URL du contenu différent de service multi-niveaux.

3. Système destiné à demander hiérarchiquement du contenu dans un système de diffusion en flux sous protocole de transfert hypertexte, HTTP, comportant :
un serveur, configuré pour recevoir une demande d'obtention d'informations de service émise par un client, renvoyer au client une réponse à la demande d'obtention d'informations de service comportant des informations de description de présentation de média, les informations de description de présentation de média comportant un localisateur uniforme de ressource, URL, correspondant à un contenu de service multi-niveaux et une règle de constitution d'URL, recevoir un message de demande de service qui est un message GET émis par le client, le message de demande de service comportant une URL correspondant à un segment constituée par le client, et renvoyer au client un message de réponse à la demande de service comportant le contenu de service correspondant à l'URL figurant dans le message de demande de service ; et
un client, configuré pour envoyer la demande d'obtention d'informations de service au serveur, déterminer un agrégat de segments, SA, correspondant au segment et une URL correspondant au SA en fonction d'une exigence de service et des informations de description de présentation de média, déterminer un numéro de série correspondant au segment dans le SA, constituer l'URL correspondant au segment selon la règle de constitution d'URL, le numéro de série du segment et l'URL correspondant au SA déterminé, envoyer au serveur le message de demande de service qui est un message GET comportant l'URL constituée et recevoir en provenance du serveur un message de réponse à la demande de service comportant le contenu de service correspondant à l'URL figurant dans le message de demande de service.
